# FASCICULE DE BREVET EUROPEEN

(11) **EP 3 710 803 B1**
(45) Date de publication et mention de la délivrance du brevet: **04.05.2022**
(21) Numéro de dépôt: 18800175.4
(22) Date de dépôt: 13.11.2018
(51) Int. Cl.: G01M 3/20, G01M 3/22, G01M 3/28, G01L 27/00

(54) **INSTALLATION ET PROCEDE DE DETECTION ET DE LOCALISATION DE FUITE DANS UN CIRCUIT DE TRANSPORT D'UN FLUIDE, NOTAMMENT D'UN AERONEF**
ANLAGE UND VERFAHREN ZUM ERKENNEN UND LOKALISIEREN EINES LECKS IN EINEM FLÜSSIGKEITSTRANSPORTKREIS, INSBESONDERE EINES FLUGZEUGES
INSTALLATION AND METHOD FOR DETECTING AND LOCATING A LEAK IN A FLUID TRANSPORT CIRCUIT, NOTABLY OF AN AIRCRAFT

(30) Priorité: 16.11.2017 FR 1760824
(43) Date de publication de la demande: 23.09.2020
(73) Titulaire: ATEQ, 78340 Les Clayes-sous-Bois (FR)
(72) Inventeur: PLATEL, Frédéric, 78310 Maurepas (FR); NATIVEL, Gabriel, 78340 Les-Clayes-Sous-Bois (FR)
(74) Mandataire: Vidon Brevets & Stratégie
(86) Numéro de dépôt international: PCT/EP2018/081009
(87) Numéro de publication internationale: WO 2019/096759

(56) Documents cités:
- FR-A1- 2 283 431
- FR-A1- 2 558 592
- GB-A- 2 049 954

## Description

### Domaine technique de l'invention

La présente invention concerne la détection et la localisation des fuites dans les circuits de transport de fluides liquides ou gazeux dont l'étanchéité doit être contrôlée.

Plus précisément, l'invention concerne la détection et la localisation de telles fuites mettant en œuvre un gaz traceur.

L'invention trouve une application particulière dans le domaine de l'aéronautique, notamment dans les circuits de mesure de la pression statique et totale dont le fonctionnement nécessite une parfaite étanchéité.

### Etat de la technique

Les circuits anémométriques d'un aéronef permettent de fournir des mesures de pressions statique et totale à la centrale anémométrique de l'aéronef permettant de déterminer des valeurs de paramètres, notamment la vitesse et l'altitude de l'aéronef en vol, qui sont utilisés pour le pilotage de ce dernier.

Chacun de ces deux circuits est constitué de tubes de faible diamètre intérieur.

Ces circuits séparés sont reliés respectivement à au moins une prise de pression statique et à un tube dit de Pitot placés sur le fuselage de l'aéronef.

Pour des raisons évidentes de sécurité, toute défaillance dans ces circuits doit pouvoir être détecté de manière fiable et rapide, puisque sinon les mesures réalisées fournissent des valeurs erronées pour les paramètres précités (utilisés pour le pilotage), ce qui peut avoir des conséquences très dommageables pour la sécurité de l'aéronef lors du vol.

Durant l'exploitation des aéronefs, il est nécessaire de contrôler en particulier l'étanchéité de ces circuits anémométriques.

Actuellement, cette opération est réalisée au moyen d'appareils de test conçus uniquement pour détecter des fuites éventuelles.

De façon connue, ce type d'appareil génère des pressions correspondant à différentes vitesses et altitudes, l'utilisateur devant corroborer l'indication des instruments de bord avec l'indication de l'appareil de test.

On connaît par exemple la technique du document GB 2 049 954 qui concerne un appareil pour tester un instrument d'aéronef, tel qu'un altimètre ou un indicateur de vitesse de l'air, à l'aide d'un appareil comprenant une pompe à air 1 ayant une entrée et une sortie, et un dispositif de mesure de pression connecté à l'entrée et à la sortie de cette pompe.

On connaît également le document FR 2 283 431 décrivant un dispositif de détection de fuites à l'aide d'un détecteur de fuites à spectromètre de masse.

On connaît encore le document FR 2 558 592 décrivant des procédés et des dispositifs de contrôle en continu de l'étanchéité de pièces en plastique extrudé.

Aucun des appareils existants n'est conçu pour permettre la localisation d'une fuite éventuelle dans les circuits anémométriques d'un aéronef.

Ainsi, lorsqu'une fuite est détectée sur ces circuits, une technique consiste à utiliser une solution savonneuse qui est appliquée sur la surface extérieure des circuits.

Un gaz sous pression est insufflé à l'intérieur du circuit à tester et la présence de bulles sur la surface extérieure des circuits permet de localiser l'endroit de la ou des fuites.

Toutefois, une telle technique présente plusieurs inconvénients.

Outre le fait qu'elle nécessite beaucoup de temps pour un opérateur ou technicien, elle ne peut pas être mise en œuvre sur l'intégralité du circuit à tester car certains éléments constitutifs de celui-ci peuvent être détériorés par la solution savonneuse, du fait de la corrosion notamment.

Par ailleurs, cette technique de localisation de fuite repose principalement sur le facteur humain.

Ainsi, une fuite peut, par inadvertance, ne pas être détectée par l'opérateur, notamment lorsqu'il s'agit d'une très petite fuite.

Par ailleurs, dans les secteurs tels que l'aéronautique où la sécurité joue un rôle majeur, la traçabilité doit être optimale. Or, ce type d'appareil ne permet pas une traçabilité des tests sur les circuits anémométriques.

Il existe donc un besoin alternatif aux solutions de localisation de fuite de l'art antérieur pour minimiser leur complexité de mise en œuvre tout en réduisant le temps de détection et en autorisant la détection de très petites fuites.

### Objectifs de l'invention

L'invention a pour objectif de proposer une technique de détection et de localisation de fuite palliant au moins certains des inconvénients de l'art antérieur cité ci-dessus.

Notamment, un objectif de la présente invention est de proposer une solution permettant la détection et la localisation de fuites dans un circuit de transport de fluide de façon rapide, fiable et à coût réduit.

### Exposé de l'invention

Ces objectifs, ainsi que d'autres qui apparaîtront par la suite, sont atteints grâce à l'invention qui concerne une installation de détection et de localisation de fuite dans au moins un circuit de transport de fluide, notamment un circuit anémométrique d'un aéronef, comprenant un appareil de test d'étanchéité comprenant des moyens de détection d'une fuite dans ledit au moins un circuit de transport de fluide.

Selon l'invention, ladite installation comprend en outre des moyens de localisation d'une fuite comprenant :
- des moyens d'injection d'un gaz traceur sous pression à l'intérieur dudit au moins un circuit de transport de fluide situés dans ledit appareil de test d'étanchéité, et
- une sonde de détection dudit gaz traceur destinée à être déplacée le long dudit au moins un circuit de transport de fluide, à l'extérieur de ce dernier, pour localiser la fuite.

Une telle installation permet de réaliser les tests de détection et de localisation de fuites sur un ou plusieurs circuits anémométriques d'un aéronef notamment avec un unique appareil de test.

Ainsi, lorsqu'une fuite est détectée par l'appareil de test, il n'est pas nécessaire de le déconnecter pour connecter à la place des moyens de localisation de la fuite.

Au contraire, on utilise l'appareil de test pour pressuriser le circuit anémométrique de gaz traceur et on cherche la fuite à l'aide d'un détecteur de type sniffer sensible à ce gaz.

Ainsi, le travail de l'utilisateur est simplifié, seule la connexion à une source de gaz traceur devant être réalisée entre la phase détection de fuite et la phase de localisation de la fuite.

L'invention permet en outre de réduire les coûts relatifs à la mise en œuvre de tels tests.

Avantageusement, la sonde de détection dudit gaz traceur est reliée audit appareil de test par une liaison filaire ou sans fil.

Une telle liaison permet la communication de données de la sonde vers l'appareil de test. Une liaison sans fil optimise la maniabilité de la sonde et simplifie le travail de l'opérateur.

De façon avantageuse, ladite installation comprend au moins un indicateur de la présence d'une fuite, situé sur l'appareil ou la sonde de détection.

Un indicateur sonore et/ou visuel disposé sur la console de l'appareil de test ou sur le détecteur renifleur permet à l'opérateur de localiser précisément et rapidement une fuite.

Préférentiellement, ledit appareil de test comprend des moyens de vidange dudit gaz traceur situé à l'intérieur dudit au moins un circuit de transport de fluide.

Une fois la fuite localisée et réparée, il est nécessaire de vider le circuit du gaz traceur pour un bon fonctionnement du circuit.

Selon une mise en œuvre particulière de l'invention, ledit gaz traceur est de l'hélium.

Il pourrait toutefois s'agir d'un autre gaz que l'hélium.

Selon un aspect particulier de l'invention, l'installation comprend une interface de contrôle comprenant des moyens de saisie et des moyens de visualisation de données relatives au test de détection d'une fuite ou d'étanchéité.

Ainsi, l'utilisateur peut saisir et visualiser les paramètres des phases de test d'étanchéité et de localisation de fuite, tels que les valeurs de pression dans le ou les circuits, les valeurs de pression mesurées dans les circuits, la durée du test, la valeur des fuites.

Par ailleurs, une telle interface permet à l'utilisateur de suivre pas-à-pas l'évolution du test.

Ladite interface peut être portable de sorte à pouvoir être déplacée par un utilisateur et reliée par une liaison filaire ou sans fil, de type Wi-Fi (marque déposée) par exemple, à l'appareil de test.

Dans un mode de réalisation particulier de l'invention, ledit appareil de test comprend des moyens de communication configurés pour échanger des données avec une unité de sauvegarde de données distante.

La mise en œuvre d'une connexion entre l'appareil de test et une unité de stockage distante assure la traçabilité des fuites localisées sur un aéronef en particulier.

Ceci permet en outre de pouvoir améliorer la conception des circuits ou de savoir sur quelles zones l'opérateur doit porter une attention particulière lors de prochains tests de localisation de fuites.

Par ailleurs, cette configuration peut permettre de minimiser le temps alloué au diagnostic du circuit en associant automatiquement les paramètres du procédé, tels que les valeurs de consigne, les intervalles de temps..., en fonction du circuit et du type d'aéronef devant être testé.

De façon avantageuse, ledit appareil de test comprend des moyens de raccordement à une source de gaz traceur.

Ainsi, lorsqu'une fuite est détectée, il n'est pas nécessaire de déconnecter l'appareil de test d'étanchéité pour connecter, à la place de celui-ci, des moyens de localisation de la fuite détectée. Le travail de l'opérateur est ainsi simplifié.

L'invention concerne, par ailleurs, un procédé de détection et de localisation de fuite dans au moins un circuit de transport de fluide, notamment un circuit anémométrique d'un aéronef, mis en œuvre dans une installation telle que décrite précédemment, comprenant les étapes :
- de mise sous pression de l'intérieur dudit au moins un circuit de transport de fluide,
- de première mesure de la pression à l'intérieur dudit au moins un circuit de transport de fluide et de deuxième mesure de la pression après un laps de temps prédéterminé,
- de comparaison des première et deuxième mesures de pression,
et dans le cas où une baisse de pression correspondant à la présence d'au moins une fuite est détectée :
- d'injection d'un gaz traceur à l'intérieur dudit au moins un circuit de transport de fluide, et
- de localisation de ladite fuite à l'aide de la sonde de détection dudit gaz traceur destinée à être déplacée le long dudit au moins un circuit de transport de fluide, à l'extérieur de ce dernier.

Selon un aspect particulier de l'invention, préalablement à ladite étape d'injection d'un gaz traceur, le procédé comprend une étape de mise à vide dudit au moins un circuit de transport de fluide.

Selon un aspect particulier de l'invention, une fois la fuite localisée, le procédé comprend une étape d'extraction dudit gaz traceur hors dudit au moins un circuit de transport de fluide.

### Liste des figures

L'invention, ainsi que les différents avantages qu'elle présente, seront plus facilement compris à la lecture de la description suivante d'un mode de réalisation de celle-ci, donné à titre de simple exemple illustratif et non limitatif, et des dessins annexés, parmi lesquels :
- la figure 1 représente le synoptique d'une installation conforme à l'invention lorsqu'elle est utilisée pour la détection et la localisation de fuite dans les circuits anémométriques d'un aéronef,
- la figure 2 représente le synoptique d'un appareil de test mis en œuvre dans l'installation de détection et de localisation de fuite de la figure 1, et
- la figure 3 illustre les étapes successives d'un procédé de détection et de localisation de fuite dans les circuits anémométriques d'un aéronef mis en œuvre dans une installation conforme à l'invention.

### Description détaillée de l'invention

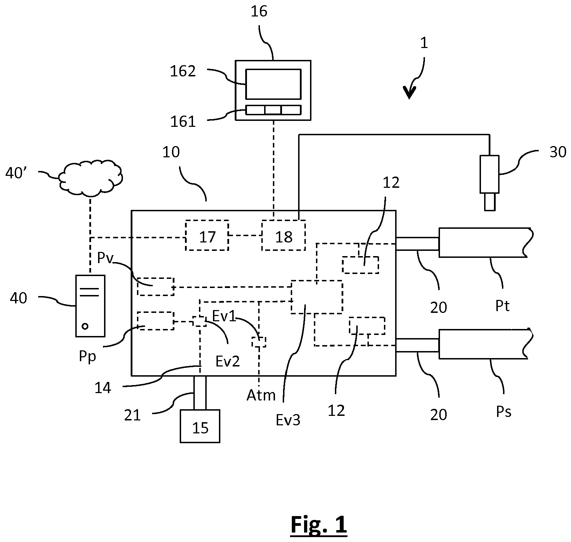

Le contrôle de l'étanchéité des circuits anémométriques d'un aéronef est effectué, conformément à l'invention, par un opérateur au moyen d'une installation 1 de détection et de localisation de fuites représentée schématiquement sur la figure 1, lorsque l'aéronef est au sol.

Les circuits anémométriques sont les circuits Pitot Pt et statique Ps de l'aéronef.

L'installation 1 de détection et de localisation de fuites comprend un appareil de test 10 d'étanchéité portable relié aux circuits Pitot Pt et statique Ps par le biais de tubulures 20 flexibles.

De façon connue, l'appareil de test 10 génère des pressions correspondant à différentes vitesses et altitudes.

Pour ce faire, l'appareil 10 de test comprend une pompe à pression Pp configurée pour injecter de l'air sous pression à l'intérieur des circuits Pitot Pt et/ou statique Ps, et des moyens de sélection, en l'occurrence des électrovannes Ev3, configurés pour sélectionner le(s) circuit(s) Pitot Pt et/ou statique Ps dans le(s)quel(s) l'air sous pression est injecté.

Ces électrovannes sont commandées électriquement.

De façon classique, l'appareil de test 10 présente une surface externe sur laquelle sont disposés les boutons de commande pour l'opérateur, les indicateurs, les prises de raccordement, ...

La pompe à pression Pp dirige de l'air atmosphérique sous pression dans des canalisations internes en direction des circuits Pitot Pt et/ou statique Ps de l'aéronef par le biais des tubulures 20 de raccordement.

L'appareil 10 de test comprend en outre une pompe à vide Pv configurée pour extraire le gaz contenu dans les circuits Pitot Pt et statique Ps.

Par ailleurs, l'appareil 10 de test comprend un premier capteur de pression, 12 configuré pour mesurer la pression à l'intérieur du circuit Pitot Pt et un deuxième capteur de pression 12 configuré pour mesurer la pression à l'intérieur du circuit statique Ps.

Pour détecter une fuite, l'appareil de test 10 effectue une première mesure de pression au sein des circuits issue des capteurs de pression, puis une deuxième mesure après un laps de temps prédéterminé.

Il compare ces mesures espacées et détermine la présence ou non de fuites dans les circuits selon que ces mesures soient différentes ou non.

Selon l'invention, l'installation 1 comprend en outre des moyens de localisation des fuites dans les circuits Pitot Pt et statique Ps.

De tels moyens de localisation de fuite comprennent des moyens d'injection d'un gaz traceur sous pression dans les circuits Pitot Pt et/ou statique Ps, et une sonde de détection 30 du gaz traceur.

Les moyens d'injection d'un gaz traceur comprennent :
- la pompe à pression Pp,
- une canalisation interne 14 d'amenée d'un gaz traceur apte à être reliée fluidiquement, par le biais de moyens de raccordement 21, à une source 15 de gaz traceur externe à l'appareil 10, et
- une électrovanne Ev2 commandée pour pouvoir permettre le passage et l'injection ou de gaz traceur (lors de la phase de localisation de la ou des fuites) à l'intérieur des circuits Pitot Pt et/ou statique Ps (une électrovanne Ev1 permet le passage d'air sous pression lors de la phase de détection de fuites).

Dans le mode de réalisation décrit, le gaz traceur utilisé est un gaz rare, tel que l'hélium par exemple.

Une telle configuration de l'installation permet à l'opérateur de réaliser les tests de détection et de localisation des fuites dans les circuits Pitot Pt et statique Ps avec l'appareil 10 de test uniquement. Seules une source d'hélium et une sonde détection sont nécessaires.

En d'autres termes, lorsqu'une fuite est détectée, il n'est pas nécessaire de déconnecter l'appareil 10 de test des circuits Pitot Pt et statique Ps. Ce même appareil 10 de test est en effet apte à injecter un gaz traceur dans ces deux circuits pour aider à la localisation de la ou des fuites avec la sonde de détection 30 du gaz traceur.

Le travail de l'opérateur est ainsi simplifié.

Dans le mode de réalisation illustré, la sonde de détection 30 est un dispositif mobile et portatif du type renifleur (ou "sniffer" en anglais) de gaz destiné à être déplacé, par un utilisateur, le long des surfaces extérieures des circuits Pitot Pt et/ou statique Ps.

Pour s'assurer que la sonde de détection 30 détecte la présence d'une fuite, il est préférable de déplacer celle-ci à une vitesse inférieure à 1 cm/s.

La sonde de détection 30 du gaz traceur, qui est bien connue de l'homme de l'art, est reliée, par le biais d'une liaison sans fil ou filaire, à l'appareil 10 de test de manière à transmettre à celui-ci les données relatives à la fuite identifiée, telles que la valeur et le taux de fuite.

La sonde de détection 30 comprend des moyens d'aspiration, ou des moyens de raccordement aptes à être couplés à des moyens d'aspiration extérieurs, configurés pour aspirer les gaz du milieu environnant.

Par ailleurs, des moyens de reconnaissance, disposés à l'intérieur de la sonde de détection, permettent de différencier le gaz traceur des gaz du milieu environnant.

La sonde de détection 30 comprend au moins un indicateur sonore et/ou visuel de la présence d'une fuite à un endroit précis de la surface extérieure de l'un des circuits anémométriques.

L'appareil 10 de test d'étanchéité comprend en outre une interface 16 permettant à l'utilisateur 1 de commander les étapes de détection et de localisation des fuites dans les circuits Pitot Pt et statique Ps.

L'interface 16 permet de paramétrer manuellement, par le biais de moyens de saisie 161, chacune des phases de détection et de localisation des fuites en agissant notamment sur les consignes de pression, de vitesse, d'altitude, de palier et de durée d'exécution du test de détection.

De tels moyens de saisie 161 permettent en outre à l'utilisateur de naviguer et de sélectionner un menu ou un mode d'utilisation (manuel ou automatique).

Par ailleurs, l'interface 16 comprend des moyens de visualisation 162 configurés pour afficher les données relatives aux tests de détection et de localisation de fuites, à savoir les données de paramétrage saisies et les données issues des tests, telles que les valeurs de fuite par exemple.

Dans le mode de réalisation illustré, l'interface 16 est portable et connectée à l'appareil 10 de test d'étanchéité par le biais d'une liaison sans fil.

Une telle interface 16 permet à un opérateur de suivre l'évolution du procédé de détection et de localisation de fuite en minimisant ses déplacements.

Les tests de vérification de l'étanchéité des circuits de transport de fluides peuvent être réalisés par un unique opérateur ce qui permet de réduire les coûts et la complexité de tels tests.

Par ailleurs, l'appareil 10 de test d'étanchéité comprend des moyens de communication 17 configurés pour transmettre tout ou partie des données relatives aux phases de détection et de localisation de fuites à des moyens de sauvegarde distants.

Dans le mode de réalisation illustré, les moyens de communication 17 sont intégrés à l'appareil 10 de test et sont configurés pour transférer les données des tests vers des moyens de stockage distants, tels qu'un serveur 40 de sauvegarde en réseau et/ou un espace de sauvegarde dématérialisé 40'.

Une telle configuration permet notamment d'améliorer la traçabilité des fuites détectées et localisées par la mis en œuvre d'une base de données alimentée et mise à jour automatiquement lors des utilisations successives de l'installation conforme à l'invention.

Une base de données permet d'associer des paramètres particuliers à chaque aéronef.

D'autre part, le technicien peut matérialiser la fuite, le détecteur indiquant un taux de fuite (la présence d'une fuite, sa localisation et sa valeur sont sauvegardées et associée à cet avion).

Pour les concepteurs des circuits de transport de fluides, une telle base de données peut permettre de déterminer, par redondance, une ou plusieurs zones sensibles des circuits de circulation de fluide testés de manière à les perfectionner.

Pour les utilisateurs de l'installation conforme à l'invention, une telle base de données peut permettre de simplifier le travail en définissant automatiquement les paramètres de tests en fonction de la nature du circuit de transport de fluides devant être testé.

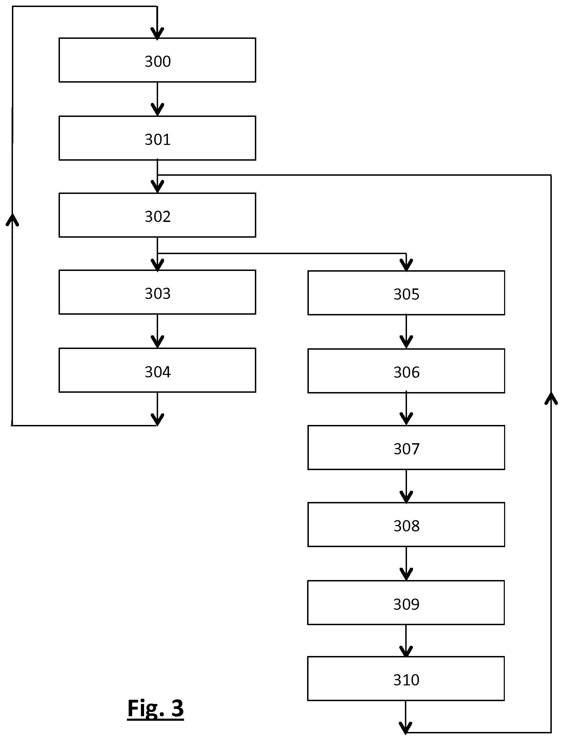

L'appareil 10 de test d'étanchéité comprend en outre des moyens de commande 18, tels un microcontrôleur, configurés pour commander les pompes Pp et Pv, les électrovannes, l'interface 16 utilisateur, la sonde de détection 30 et les moyens de communication 17 de sorte à mettre en œuvre les différentes étapes du procédé de détection et de localisation de fuite, détaillées par la suite en relation avec la figure 3.

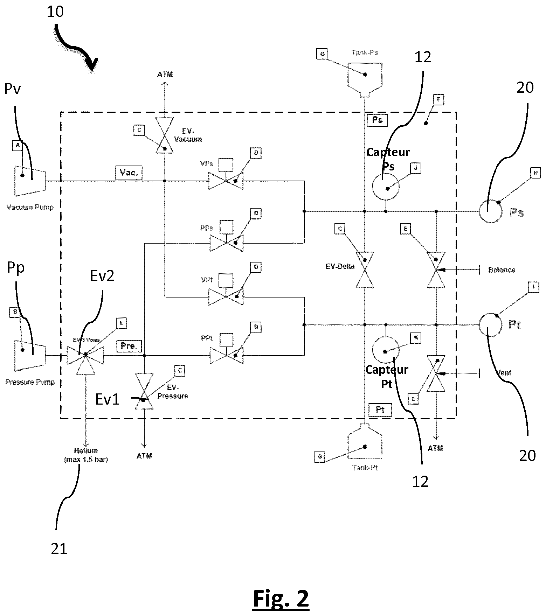

La figure 2 représente un exemple de synoptique de l'appareil 10 de test de la figure 1.

L'appareil de test 10 comprend une alimentation en air extérieur reliée à une première électrovanne Ev1 qui autorise ou bloque, selon sa position, l'introduction de l'air à l'intérieur de l'appareil de test, et des circuits Pitot Pt et/ou statique Ps.

L'appareil de test 10 comprend une alimentation en gaz traceur reliée à une deuxième électrovanne Ev2 qui autorise ou bloque, selon sa position, l'introduction de gaz traceur à l'intérieur de l'appareil de test, et des circuits Pitot Pt et/ou statique Ps.

La deuxième électrovanne Ev2 comprend une première voie couplée à la sortie de la pompe à pression Pp, une deuxième voie couplée à une alimentation en gaz traceur et une troisième voie couplée à la sortie de la première électrovanne Ev1.

Selon la position des électrovannes Ev1, Ev2, la pompe à pression Pp injecte de l'air sous pression ou le gaz traceur dans les circuits Pitot Pt et statique Ps.

Ainsi, lorsqu'une fuite est détectée par l'appareil 10 de test de l'étanchéité, on ferme l'électrovanne Ev1, et donc le circuit d'amenée d'air, et on ouvre l'électrovanne Ev2, et donc le circuit d'amenée de gaz traceur, de sorte à permettre la localisation de la ou des fuites.

L'appareil de test 10 comprend une vanne d'isolement d'un des circuits Pitot et statique.

La figure 3 détaille les étapes principales du procédé de détection et de localisation de fuite conforme à l'invention, dans les circuits anémométriques d'un aéronef, mis en œuvre à l'aide de l'installation 1 décrite précédemment.

À l'étape initiale 300, l'opérateur relie l'installation 1 de détection et de localisation de fuite aux circuits anémométriques de l'aéronef devant être testés lorsque celui-ci est au sol.

En préambule, l'opérateur branche un générateur de gaz traceur, tel une bouteille d'hélium, à la canalisation 14 interne de gaz traceur par le biais des moyens de raccordement 21 de l'appareil 10 de test.

Par ailleurs, si les paramètres de test ne sont pas prédéfinis, l'opérateur les saisit par le biais de l'interface 16.

Les paramètres de test concernent notamment les consignes de pression, de durée du test, d'altitude...

Lorsque le paramétrage est terminé, l'opérateur valide les informations saisies pour pouvoir continuer le test de détection et de localisation de fuite.

À l'étape 301, l'appareil 10 de test injecte, par le biais de la pompe à pression Pp, de l'air sous pression à l'intérieur des circuits Pitot Pt et statique Ps de sorte à simuler une montée en altitude à une vitesse prédéterminée, jusqu'à atteindre un pallier d'altitude prédéterminé.

À l'étape 302, lorsque la pression interne des circuits correspond à la valeur de consigne saisie, l'injection d'air sous pression est interrompue et une première mesure de la pression est réalisée, par le biais des capteurs de pression 12, puis une seconde mesure est réalisée après un laps de temps prédéterminé.

Si les deux mesures de pression sont identiques ou n'ont varié que d'une faible marge de valeur prédéterminée, alors il est considéré que les circuits Pitot Pt et statique Ps sont étanches.

Les circuits étant étanches, l'air sous pression présent dans ceux-ci est évacué par la pompe à vide Pv, à l'étape 303, et les données relatives aux tests sont transmises vers les moyens 40, 40' de sauvegarde (étape 304).

Le procédé de détection et de localisation de fuite est alors terminé et l'installation 1 de détection et de localisation de fuite peut être débranchée et utilisée pour une autre opération de détection de fuite (300) sur un autre aéronef.

Dans le cas où à l'étape 302, la seconde mesure de pression est inférieure à la première mesure, alors il est déterminé qu'au moins une fuite est présente sur au moins un des circuits Pitot Pt et statique Ps.

Dans ce cas, l'opérateur est informé, par le biais de l'interface 16, de la présence d'une fuite et est invité à lancer, toujours par le biais de l'interface 16, un test de localisation de celle-ci.

Avant de réaliser le test de localisation de fuite, l'opérateur doit, à l'étape 305, choisir sur quel(s) circuit(s) Pitot Pt et/ou statique Ps le test de localisation de fuite doit être réalisé.

En d'autres termes, l'opérateur peut choisir d'obturer un circuit pour réaliser le test de localisation de fuite sur un seul circuit.

Ceci permet de réduire la durée du test, si un des circuits est plus sujet aux fuites que l'autre par exemple, et de minimiser la consommation de gaz traceur par la suite.

À l'étape 306, l'air sous pression présent dans le ou les circuits sélectionné(s) est évacué par la pompe à vide Pv jusqu'à une valeur de consigne prédéterminée.

À l'étape 307, le gaz traceur est injecté dans le ou les circuits Pitot Pt et/ou statique Ps, jusqu'à ce que le ou les circuits soient remplis d'hélium à une pression donnée.

A l'étape 308, l'opérateur équipé de la sonde de détection 30 déplace celle-ci à proximité du ou des circuits Pitot Pt et/ou statique Ps, notamment à proximité de zones sensibles sujettes aux fuites, de manière à localiser celle-ci.

Lorsque la sonde de détection 30 passe au-dessus d'une fuite, le gaz traceur qui s'échappe du conduit examiné est aspiré par la sonde qui alerte l'opérateur de la présence d'une fuite et transmet les informations relatives à celle-ci, notamment la valeur de fuite, à l'appareil 10 de test.

L'opérateur étant informé de la localisation de la fuite, celui-ci interrompt temporairement, à l'étape 309, le test de localisation de fuite.

Dès lors, l'opérateur peut, avec le matériel adéquat, procéder à la réparation de la fuite.

Lorsque celle-ci est réparée, l'opérateur renouvelle le test de localisation de fuite à l'étape 302, de manière à vérifier que la fuite précédemment détectée est obturée et réitérer le test de détection de fuite pour vérifier la présence ou non d'une autre fuite.

Si le circuit s'avère étanche, l'hélium est évacué du circuit (étape 310).

Dans le mode de réalisation décrit, l'installation de l'invention est mise en œuvre pour détecter et localiser des fuites dans les circuits Pitot et statique d'un aéronef.

Toutefois, une telle installation trouve des applications dans tout domaine d'activité présentant des circuits de transport de fluides liquides ou gazeux, tel que dans l'industrie chimique, les centrales nucléaires, les gazoducs, les oléoducs.

Dans un mode de réalisation particulier, des moyens de sauvegarde des données relatives aux tests de détection et de localisation de fuite sont situés dans l'appareil de test d'étanchéité.

Par ailleurs, l'interface 16 peut être solidaire de l'appareil de test.

Dans un mode de réalisation, les paramètres de tests de détection et de localisation des fuites sont prédéfinis dans l'appareil de test.

Les paramètres de pression de remplissage et vidange peuvent être entrés en standard dans l'appareil. Un mode dit "expert" peut être prévu pour permettre à l'opérateur d'ajuster ces pressions.

L'opérateur n'ayant pas accès au paramétrage des données, l'interface affiche uniquement l'évolution des tests de détection et de localisation des fuites.

## Revendications

1. Installation (1) de détection et de localisation de fuite dans au moins un circuit (Ps, Pt) de transport de fluide, notamment un circuit anémométrique d'un aéronef, comprenant un appareil (10) de test d'étanchéité comprenant des moyens de détection (12) d'une fuite dans ledit au moins un circuit (Ps, Pt) de transport de fluide,
**caractérisée en ce que** ladite installation (1) comprend en outre des moyens de localisation d'une fuite comprenant :
- des moyens d'injection (Pp, 14, Ev2) d'un gaz traceur sous pression à l'intérieur dudit au moins un circuit (Ps, Pt) de transport de fluide situés dans ledit appareil (10) de test d'étanchéité, et
- une sonde de détection (30) dudit gaz traceur destinée à être déplacée le long dudit au moins un circuit (Ps, Pt) de transport de fluide, à l'extérieur de ce dernier, pour localiser la fuite.

2. Installation (1) selon la revendication 1, **caractérisée en ce que** la sonde de détection (30) dudit gaz traceur est reliée audit appareil (10) de test par une liaison filaire ou sans fil.

3. Installation (1) selon la revendication 1 ou 2, **caractérisée en ce que** ladite installation (1) comprend au moins un indicateur de la présence d'une fuite, situé sur l'appareil (10) de test ou la sonde de détection (30).

4. Installation (1) selon l'une des revendications 1 à 3, **caractérisée en ce que** ledit appareil (10) de test comprend des moyens de vidange (Pv) dudit gaz traceur situé à l'intérieur dudit au moins un circuit (Ps, Pt) de transport de fluide.

5. Installation selon l'une quelconque des revendications 1 à 4, **caractérisée en ce que** ledit gaz traceur est de l'hélium.

6. Installation (1) selon l'une des revendications 1 à 5, **caractérisée en ce qu'**elle comprend une interface (16) de contrôle comprenant des moyens de saisie (161) et des moyens de visualisation (162) de données relatives au test d'étanchéité.

7. Installation (1) selon l'une quelconque des revendications 1 à 6, **caractérisé en ce que** ledit appareil (10) de test comprend des moyens de communication (17) configurés pour échanger des données avec une unité (40, 40') de sauvegarde de données distante.

8. Installation (1) selon l'une quelconque des revendications 1 à 7, **caractérisé en ce que** ledit appareil (10) de test comprend des moyens de raccordement (21) à une source (15) de gaz traceur.

9. Procédé de détection et de localisation de fuite dans au moins un circuit (Ps, Pt) de transport de fluide, notamment un circuit anémométrique d'un aéronef, mis en œuvre dans une installation (1) selon l'une quelconque des revendications 1 à 8, **caractérisé en ce qu'**il comprend les étapes :
- de mise sous pression (301) de l'intérieur dudit au moins un circuit (Pt, Ps) de transport de fluide,
- de première mesure de la pression à l'intérieur dudit au moins un circuit (Pt, Ps) de transport de fluide et de deuxième mesure de la pression après un laps de temps prédéterminé, et de comparaison des première et deuxième mesures de pression (302),
et dans le cas où une baisse de pression correspondant à la présence d'au moins une fuite est détectée :
- d'injection (307) d'un gaz traceur à l'intérieur dudit au moins un circuit (Pt, Ps) de transport de fluide, et
- de localisation (308) de ladite fuite à l'aide de la sonde de détection (30) dudit gaz traceur destinée à être déplacée le long dudit au moins un circuit (Pt, Ps) de transport de fluide, à l'extérieur de ce dernier.

10. Procédé selon la revendication 9, caractérisé en que, préalablement à ladite étape (307) d'injection d'un gaz traceur, le procédé comprend une étape de mise à vide dudit au moins un circuit (Pt, Ps) de transport de fluide.

11. Procédé selon la revendication 9 ou 10, caractérisé en qu'une fois la fuite localisée, le procédé comprend une étape (310) d'extraction dudit gaz traceur hors dudit au moins un circuit (Pt, Ps) de transport de fluide.

## Patentansprüche

1. Anlage (1) zum Erkennen und Orten eines Lecks in mindestens einem Fluidtransportkreislauf (Ps, Pt), insbesondere einem anemometrischen Kreislauf eines Luftfahrzeugs, umfassend ein Dichtheitstestgerät (10) mit Mitteln (12) zum Erkennen eines Lecks in dem mindestens einen Fluidtransportkreislauf (Ps, Pt),
**dadurch gekennzeichnet, dass** die Anlage (1) ferner Mittel zum Orten eines Lecks umfasst mit:
- Mitteln (Pp, 14, Ev2), die in dem Dichtheitstestgerät (10) angeordnet sind, um ein Spürgas unter Druck in den mindestens einen Fluidtransportkreislauf (Ps, Pt) einzuspeisen, und
- einem Erkennungssensor (30) für das Spürgas, welcher dazu bestimmt ist, entlang des mindestens einen Fluidtransportkreislaufs (Ps, Pt) außerhalb von diesem bewegt zu werden, um das Leck zu orten.

2. Anlage (1) nach Anspruch 1, **dadurch gekennzeichnet, dass** der Erkennungssensor (30) für das Spürgas mit dem Testgerät (10) drahtgebunden oder drahtlos verbunden ist.

3. Anlage (1) nach Anspruch 1 oder 2, **dadurch gekennzeichnet, dass** die Anlage (1) mindestens eine Anzeige des Vorhandenseins eines Lecks umfasst, die auf dem Testgerät (10) oder dem Erkennungssensor (30) angeordnet ist.

4. Anlage (1) nach einem der Ansprüche 1 bis 3, **dadurch gekennzeichnet, dass** das Testgerät (10) Mittel (Pv) umfasst, um das in dem mindestens einen Fluidtransportkreislauf (Ps, Pt) befindliche Spürgas zu entleeren.

5. Anlage nach einem beliebigen der Ansprüche 1 bis 4, **dadurch gekennzeichnet, dass** das Spürgas Helium ist.

6. Anlage (1) nach einem der Ansprüche 1 bis 5, **dadurch gekennzeichnet, dass** sie eine Steuerungsschnittstelle (16) mit Erfassungsmitteln (161) und Mitteln (162) zum Anzeigen von Daten über den Dichtheitstest umfasst.

7. Anlage (1) nach einem beliebigen der Ansprüche 1 bis 6, **dadurch gekennzeichnet, dass** das Testgerät (10) Kommunikationsmittel (17) umfasst, die eingerichtet sind, um Daten mit einer entfernten Datenspeichereinheit (40, 40') auszutauschen.

8. Anlage (1) nach einem beliebigen der Ansprüche 1 bis 7, **dadurch gekennzeichnet, dass** das Testgerät (10) Mittel (21) für den Anschluss an eine Spürgasquelle (15) umfasst.

9. Verfahren zum Erkennen und Orten eines Lecks in mindestens einem Fluidtransportkreislauf (Ps, Pt), insbesondere einem anemometrischen Kreislauf eines Luftfahrzeugs, in einer Anlage (1) nach einem beliebigen der Ansprüche 1 bis 8, **dadurch gekennzeichnet, dass** es die Schritte umfasst:
- Druckbeaufschlagung (301) des Inneren des mindestens einen Fluidtransportkreislaufs (Pt, Ps),
- erste Messung des Drucks in dem mindestens einen Fluidtransportkreislauf (Pt, Ps) und zweite Messung des Drucks nach einem vorbestimmten Zeitraum, und Vergleich der ersten und zweiten Druckmessung (302),
und falls ein Druckabfall erkannt wird, der dem Vorhandensein mindestens eines Lecks entspricht:
- Einspeisung (307) eines Spürgases in den mindestens einen Fluidtransportkreislauf (Pt, Ps) und
- Ortung (308) des Lecks mit Hilfe des Erkennungssensors (30) für das Spürgas, welcher dazu bestimmt ist, entlang des mindestens einen Fluidtransportkreislaufs (Pt, Ps) außerhalb von diesem bewegt zu werden.

10. Verfahren nach Anspruch 9, **dadurch gekennzeichnet, dass** das Verfahren vor dem Schritt (307) des Einspeisens eines Spürgases, einen Schritt der Entleerung des mindestens einen Fluidtransportkreislaufs (Pt, Ps) umfasst.

11. Verfahren nach Anspruch 9 oder 10, **dadurch gekennzeichnet, dass** das Verfahren nach der Leckortung einen Schritt (310) des Extrahierens des Spürgases aus dem mindestens einen Fluidtransportkreislauf (Pt, Ps) umfasst.

## Claims

1. Installation (1) for detecting and locating a leak in at least one fluid transport circuit (Ps, Pt), notably an anemometer circuit of an aircraft, comprising a leak test apparatus (10) comprising means (12) for detecting a leak in said at least one fluid transport circuit (Ps, Pt),
**characterised in that** said installation (1) further comprises means for locating a leak comprising:
- means (Pp, 14, Ev2) for injecting a trace gas under pressure into said at least one fluid transport circuit (Ps, Pt), situated in said leak test apparatus (10), and
- a trace gas detection probe (30) intended to be moved along said at least one fluid transport circuit (Ps, Pt) on the outside thereof, in order to locate the leak.

2. Installation (1) according to claim 1, **characterised in that** the probe (30) for detecting said trace gas is connected to said test apparatus (10) by a wired or wireless link.

3. Installation (1) according to claim 1 or 2, **characterised in that** said installation (1) comprises at least one indicator of the presence of a leak, situated on the test apparatus (10) or the detection probe (30).

4. Installation (1) according to one of claims 1 to 3, **characterised in that** said test apparatus (10) comprises draining means (Pv) of said trace gas situated inside said at least one fluid transport circuit (Ps, Pt).

5. Installation according to any one of claims 1 to 4, **characterised in that** said tracer gas is helium.

6. Installation (1) according to one of claims 1 to 5, **characterised in that** it comprises a control interface (16) comprising input means (161) and display means (162) of data relating to the leak test.

7. Installation (1) according to any one of claims 1 to 6, **characterised in that** said test apparatus (10) comprises communication means (17) configured to exchange data with a remote data backup unit (40, 40').

8. Installation (1) according to any one of claims 1 to 7, **characterised in that** said test apparatus (10) comprises connection means (21) to a trace gas source (15).

9. Method for detecting and locating a leak in at least one fluid transport circuit (Ps, Pt), notably an anemometer circuit of an aircraft, used in an installation (1) according to any one of claims 1 to 8, **characterised in that** it comprises the steps of:
- pressurising (301) the inside of said at least one fluid transport circuit (Pt, Ps),
- first pressure measurement inside said at least one fluid transport circuit (Pt, Ps) and second pressure measurement after a predetermined time interval, and comparing the first and second pressure measurements (302),
and in the case where a pressure drop corresponding to the presence of at least one leak is detected:
- injecting (307) a trace gas into said at least one fluid transport circuit (Pt, Ps), and
- locating (308) said leak using the trace gas detection probe (30) intended to be moved along said at least one fluid transport circuit (Pt, Ps) on the outside thereof.

10. Method according to claim 9, **characterised in that**, prior to said step (307) of injecting a trace gas, the method comprises a step of evacuating said at least one fluid transport circuit (Pt, Ps).

11. Method according to claim 9 or 10, **characterised in that**, once the leak has been located, the method comprises a step (310) of extracting said trace gas from said at least one fluid transport circuit (Pt, Ps).
